# EUROPEAN PATENT SPECIFICATION

(11) **EP 0 872 125 B1**
(45) Date of publication and mention of the grant of the patent: **20.11.2002**
(21) Application number: 97943692.0
(22) Date of filing: 08.10.1997
(51) Int. Cl.: H04Q 3/00, H04Q 3/66

(54) **COMMUNICATIONS LINK INTERCONNECTING SERVICE CONTROL POINTS OF A LOAD SHARING GROUP FOR TRAFFIC MANAGEMENT CONTROL**
ÜBERTRAGUNGSLEITUNG ZUM VERBINDEN VON DIENSTSTEUERPUNKTEN EINER LASTVERTEILUNGSGRUPPE FÜR VERKEHRSVERWALTUNGSSTEUERUNG
LIAISONS RELIANT LES POINTS DE COMMANDE DE SERVICE D'UN GROUPE DE REPARTITION DES CHARGES A DES FINS DE GESTION DU TRAFIC

(30) Priority: 25.10.1996 US 29170 P; 11.03.1997 US 815258
(43) Date of publication of application: 21.10.1998
(73) Proprietor: Nortel Networks Limited, Montreal, Quebec H2Y 3Y4 (CA)
(72) Inventor: MOHARRAM, Omayama, El-Sayed, Carleton Place, Ontario K7C 3P1 (CA)
(74) Representative: Ryan, John Peter William
(86) International application number: CA9700739
(87) International publication number: WO98019468

(56) References cited:
- EP-A- 0 735 786
- EP-A- 0 804 044
- TSOLAS N ET AL: "PERFORMANCE AND OVERLOAD CONSIDERATIONS WHEN INTRODUCING IN INTO AN EXISTING NETWORK" INTERNATIONAL ZURICH SEMINAR ON DIGITAL COMMUNICATIONS INTELLIGENT NETWORKS AND THEIR APPLICATIONS, 1 January 1992, pages 407-414, XP000570865
- BRAY M: "IMPACT OF NEW SERVICES ON SCP PERFORMANCE" INTERNATIONAL CONFERENCE ON COMMUNICATIONS, INCLUDING SUPERCOMM TECHNICAL SESSIONS. ATLANTA, APR. 15 - 19, 1990, vol. VOL. 1, no. -, 15 April 1990, INSTITUTE OF ELECTRICAL AND ELECTRONICS ENGINEERS, pages 241-247, XP000147409
- KAWAMURA H ET AL: "A CONGESTION CONTROL SYSTEM FOR AN ADVANCED INTELLIGENT NETWORK" 1996 IEEE NETWORK OPERATIONS AND MANAGEMENT SYMPOSIUM (NOMS), KYOTO, APR. 15 - 19, 1996, vol. VOL. 2, no. SYMP. 5, 15 April 1996, INSTITUTE OF ELECTRICAL AND ELECTRONICS ENGINEERS, pages 628-631, XP000634828
- HIRANO M ET AL: "DISTRIBUTED CONTROL NODE ARCHITECTURE IN THE ADVANCED INTELLIGENT NETWORK" ISS '95. WORLD TELECOMMUNICATIONS CONGRESS. (INTERNATIONAL SWITCHIN SYMPOSIUM), ADVANCED SWITCHING TECHNOLOGIES FOR UNIVERSAL TELECOMMUNICATIONS AT THE BEGINNING OF THE 21ST. CENTURY BERLIN, APR. 23 - 28, 1995, vol. VOL. 2, no. SYMP. 15, 23 April 1995, VERBAND DEUTSCHER ELEKTROTECHNIKER (VDE) ET AL, pages 278-282, XP000495667

## Description

### Related Application

This application is related to copending European patent application No. 97943690.4 (WO98/19467), entitled "Load Sharing Group Of Service Control Points Connected To A Mediation Point For Traffic Management Control", which was filed concurrently herewith and is incorporated herein by reference.

### Background Of The Invention

This invention relates generally to Intelligent Networks for telecommunications and, in particular, to load sharing between a group of Service Control Points for traffic management control within the network.

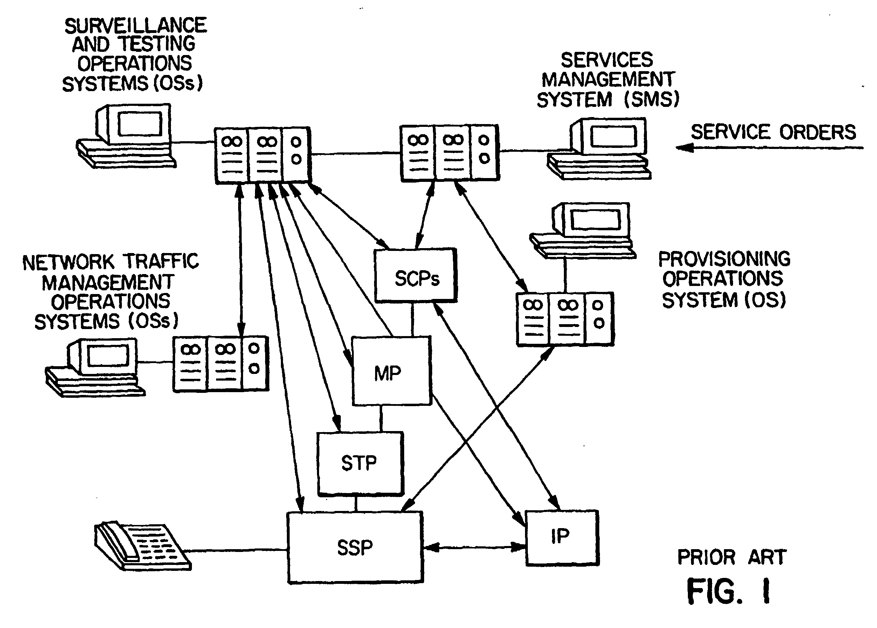

With reference to Figure 1, as is well known, an Intelligent Network (IN) includes various network elements (NEs), such as, Service Switching Points (SSPs), Service Control Points (SCPs), Adjuncts, Intelligent Peripherals (IPs), and Mediation Points (MPs). The IN service offering implies cooperation between different network elements, typically the SSPs and SCPs, using the Common Channel Signaling No. 7 (CCS7) network protocols.

An Operations, Administration, and Maintenance (OAM) management environment is characterized by functionality to ensure reliable operation of the IN. Telecommunication Management Network (TMN) components providing the network OAM management include a Services Management System (SMS), Surveillance and Testing Operations Systems, and Network Traffic Management (NTM) Operations Systems (OSs). Measurements, logs and alarms related to network operations and services are generated by the NEs and collected by the OSs for OAM management. The Surveillance and Testing Operations Systems (OSs) provide fault management. The main objective of the Network Traffic Management OSs is to manage overload controls at the various NEs and to ensure service reliability and network integrity.

The NTM consists of monitoring and control functions aimed at the detection of abnormal load conditions and excessive traffic congestion, activation, de-activation and monitoring of overload controls. The IN NTM requirements in [1] GR-1298-CORE, Advanced Intelligent Network (AIN) Switching Systems Generic Requirements, Bellcore, Issue 3, July , 1996 ; [2] Draft Revised ITU-T Recommendation Q.1218, Interface Recommendation for Intelligent Network CS-1. COM 11-R 104E, May 1995; and [3] ITU-T Recommendation E.412, Telephone Network and ISDN Quality of Service, Network Management and traffic Engineering, Network Management Controls, emphasize the need for automatic call-associated query and non-call-associated signaling messages limiting controls triggered by detected congestion conditions at one or more connected equipment. These controls minimize congestion conditions, due to traffic overloads (or reduced call processing capacity) at the NE, from spreading to the subtending NEs and throughout the rest of the network.

Automatic Code Gapping (ACG) is a network management mechanism used in the control of network congestion. For example, if an SCP becomes congested with queries, it can issue a request to slow down or stop a SSP from sending queries for a predetermined period. When an SCP finds that it is being overloaded with queries, it automatically issues a request that the SSP slow down or stop sending queries, matching a certain criterion or criteria, for a given duration of time. The criteria and the request can also be manually initiated from the service management system (SMS). Both automatic- and manually-initiated requests are relayed from the SCP to the SSP in the form of an ACG message. From the SCP/SMS initiated ACG request messages, a list of controls is created and maintained against which pending SCP destined queries are checked. During call processing, prior to sending an IN query, the ACG controls are checked to determine whether the query is to be gapped (that is, blocked). If the criteria specified in the control matches that for the pending query, then the query is gapped, and either IN final treatment or Default Routing is applied to the call.

Implementation of the Automatic Code Gapping (ACG) mechanism consists of procedures in the SCPs for detecting and identifying the congestion level at the SCP, messages for communicating the SCP congestion level back to the SSPs, and procedures in the SSPs for throttling back the traffic. The ACG controls are all based on indirect routing of SCP queries. A traffic control item is identified by its Global Title Address (GTA) and Translation Type (TT), which are converted at the Signaling Transfer Point (STP) to the signaling point code of the destination SCP and Subsystem number (SSN) of the particular application or application set at that SCP. An ACG request to a SSP tells it to regulate sending the traffic using specific gap interval and duration. The ACG control can be initiated from the SCP in two ways: (1) automatically via SCP initiated code control; and (2) manually via the SMS Originated Code Control (SOCC). The manual SOCC method complements the automatic SCP method.

Having regard to the automatic SCP controls, when the SSP receives an ACG message with a control cause indicator of "SCP Overload", it places the TT and 6-digit GTA on the SCP overload controls list. Timers for both gap interval and duration are started by the SSP when the control is added. Subsequent calls being processed by the SSP that generate queries with a called or charged number, matching the 6 digit code for the given TT are gapped until a period of time equal to the gap interval expires. After the gap interval expires the SSP allows the next applicable query to proceed normally. After this query has been sent, the SSP resumes blocking for another period of time equal to the gap interval. This cycle continues until a period of time equal to the duration has passed. The SCP overload control is removed from the controls list when the duration expires.

For the manual SOCC controls, when the SSP receives an ACG message with Control Cause Indicator of "SMS Originated", it places the "TT and 3-, 6-, 7-, 8-, 9-, or 10-digit GTA" control on the SOCC controls list. Timers for both gap interval and duration start when that control is added. After the control with a TT and GTA is added to the SOCC controls list and the gap interval timer has been started, calls which generate queries with "called or charged number + TT" matching the GTA + TT in the SOCC controls list are gapped until the gap interval expires. After the gap interval expires, the SSP allows the next applicable query to proceed normally. After this query has been sent, the SSP resumes blocking for another period of time equal to the gap interval. This cycle continues until a period of time equal to the duration has passed. The control is removed from the SOCC controls list when the duration expires.

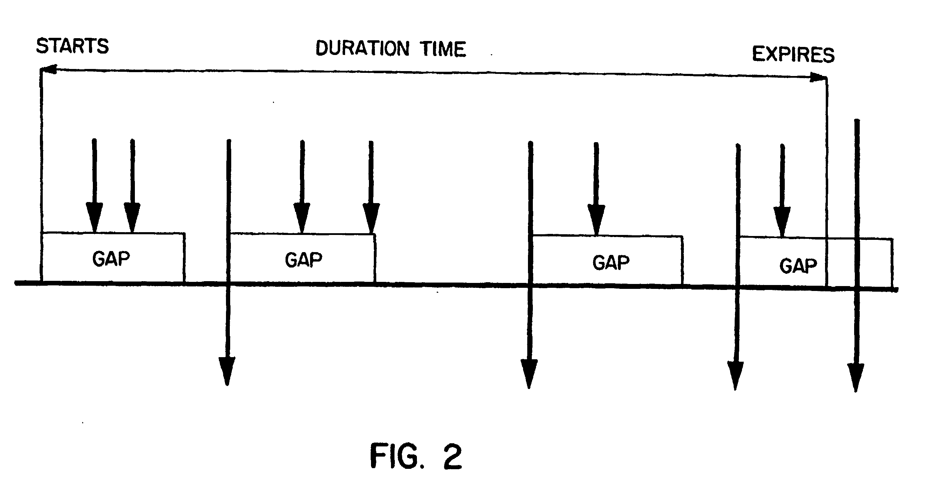

Code gapping is a form of rate control. The SSP uses code gapping to regulate the queries destined to the SCP. Code gapping limits the number of initial queries per second, which is exemplified in Figure 2. The arrows represent time when queries would normally be sent from the SSP to the SCP. When gapping is initiated, all queries from the source are blocked during the first gap interval, after which the next query may pass. Once a query passes, then all queries are blocked for the following gap. At most one query per gap interval will pass. This pattern repeats until the duration timer expires or the call gapping is de-activated.

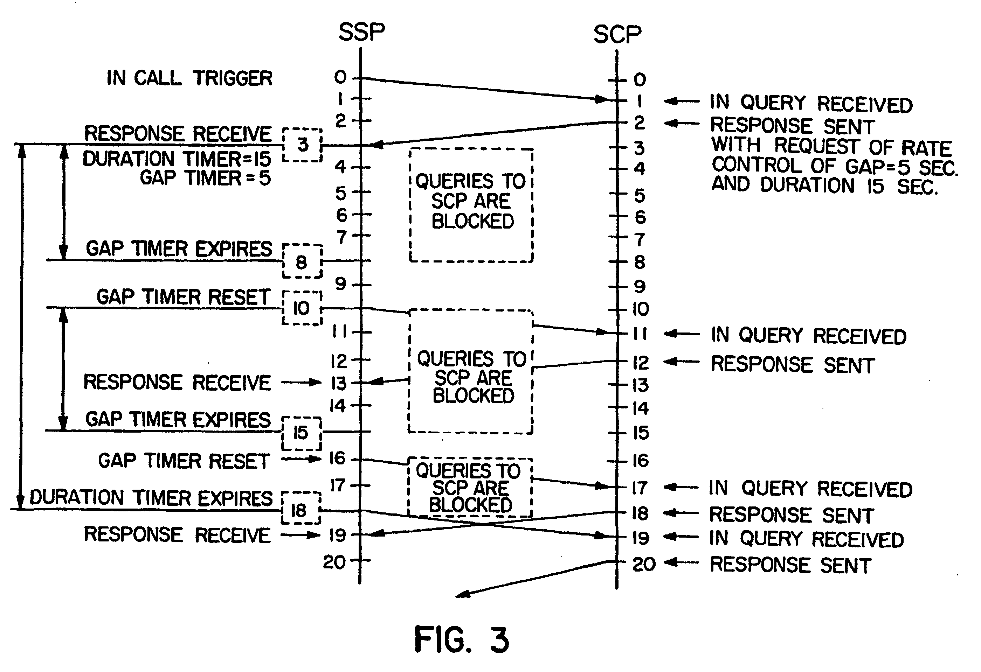

Figure 3 illustrates by way of example operation of code gapping control, wherein a duration of 15 seconds and gap interval of 5 seconds is employed. As shown in the figure, when the SSP receives an ACG request from an overloaded SCP, it initializes a duration timer and a gap timer. From 3 to 8 seconds, queries to the SCP are blocked (that is, no queries are sent to the SCP). When the gap timer expires, the next query is sent to the SCP. When the SSP sends a query to the SCP, it resets the gap timer (as shown at the 16th second), and the SCP processes the query and checks to see if the control should stay active. The SSP blocks queries from the 16 to 18 seconds, after which the duration timer expires. From the 18 seconds onward, queries are sent to SCP.

A potential problem with conventional code gapping may be an unfair throttling of SSP traffic. The SSP uses a gap interval and duration to regulate queries to the SCP and sends excess queries to reorder tone or announcement. When gapping is initiated, all queries from the SSP are blocked during the first gap interval, after which the next query may pass. Once a query passes then all queries are blocked for the following gap interval. Thus at most one query per gap interval will pass. The pattern of one query accepted followed by an interval in which all are blocked repeats until a duration timer expires. In this mechanism the same gap interval and duration are applied to all SSP offices. The control throttles large office much more severely than small offices. This results in unfair treatment between large and small offices. The control alternatingly turns traffic on and off, and the off period may be too long. Further, large offices can be expected to throttle a higher percentage of traffic than smaller offices. This mechanism does not take the SSP office size into consideration.

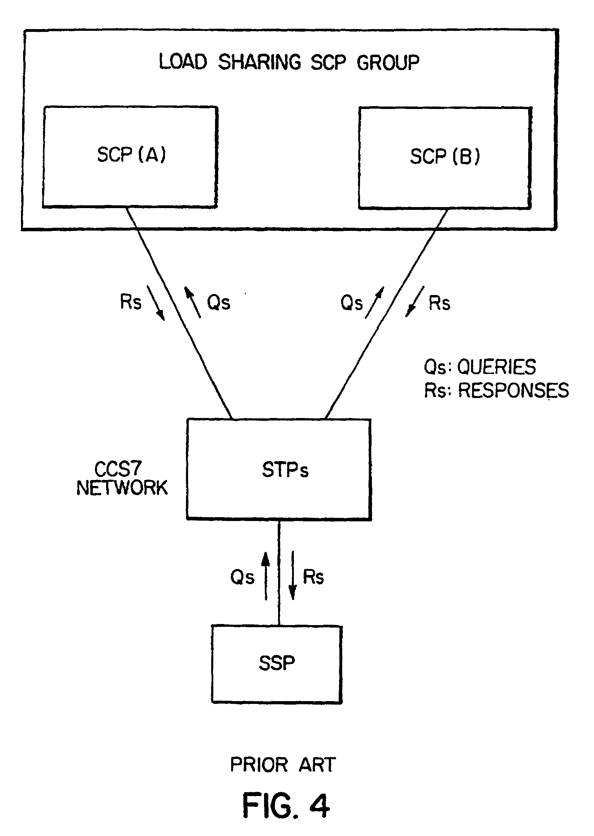

Another deficiency of conventional code gapping may be poor SCP resource utilization in conection with a load sharing SCP group. Operating companies replicate services on multiple SCPs for load sharing and reliability. An illustration of replicated SCPs (or Load Sharing SCPs) deployment is shown in Figure 4. Typically, each SCP in the group is identified by the same point code and the STP cyclically selects each SCP in sequence to process respective queries which it receives from SSPs.

If one SCP in the load sharing SCP group is overloaded, it tells the SSPs to regulate the traffic destined to it. Since the SSPs view the load sharing SCP group as a single entity and the traffic control item is identified by its Global Title Address (GTA) and Translation Type (TT), the SSP applies the control to all calls that generate queries with matching GTA/TT. For example, if one of the multiple SCPs, say SCP-A, in a load sharing SCP group sends an overload control request to the SSP, all calls which match the GTA/TT under control will be blocked by the SSP even if the other SCPs in the group, namely SCP-B could process those queries. This results in poor SCPs resources utilization.

Yet another problem may be control instability. If SCP-B is not overloaded, it might request the SSP to remove the control. This results in control request and removal messages exchanges between the SSP and the load sharing SCP group. Excessive messages between the SSPs and load sharing SCP group may result in network traffic congestion and network performance degradation.

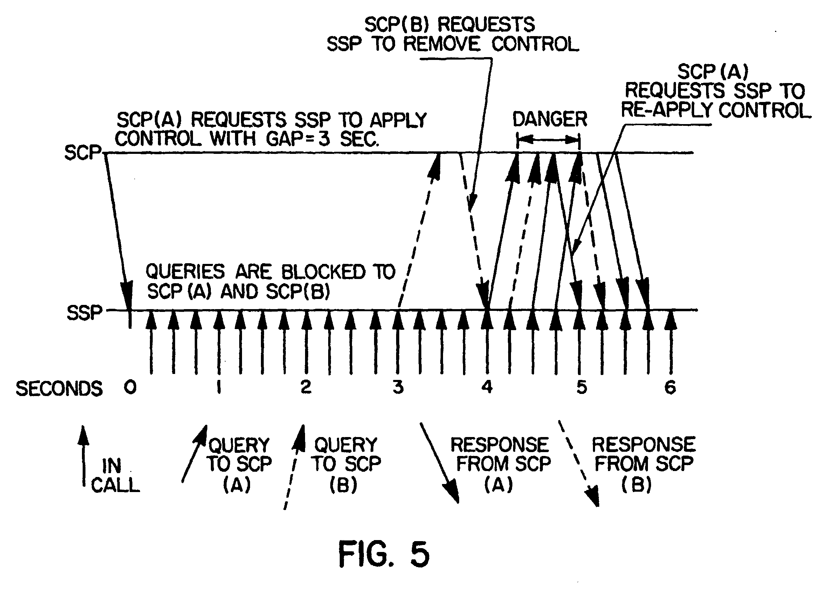

This problem further results in the instability of the controls. For two SCPs in the load sharing group, a control could be activated by one SCP and removed by the other constantly. The SCP under congestion will be processing queries not being blocked by the SSP and might get in severe overload state. This may happen, for example, in the period between the moment where the control is removed by SCP-B and the moment where a new control is activated by SSP, which is represented by the "Danger" zone in Figure 5. This problem exists because the replicated SCPs do not communicate between each other to synchronize their active controls lists. One SCP does not know that another SCP requested a control for the common service Subsystem Number (SSN).

It is, therefore, desirable to resolve at least some of the identified load sharing SCPs traffic management control problems.

An article entitled "Distributed Control Node Architecture in the Advanced Intelligent Network" by Hirano, M et al. (ISS 95 World Telecommunications Congress. International Switching Symposium. Advanced switching technologies for universal telecommunications at the beginning of the 21^{st} Century Berlin, APR 23-28,1995, Vol.2. No. SYMP. 15, 23 April 1995, Verband Deutscher Elektrokechniker (VDE) et al, pages 278-282) describes a method for synchronising operation of a plurality of SCPs forming a load sharing group as specified in the preamble of claim 1.

### Summary Of The Invention

It is an object of the present invention to provide a new and improved load sharing service control point group.

The invention provides a method for synchronising operation of a plurality of service control points as claimed in claim 1; a load sharing group of service control points as claimed in claim 10; and a method for operating a service control point as claimed in claim 14. A first example provides a method for synchronizing operation of a plurality of service control points (SCPs) in a load sharing group, comprising the steps of: maintaining, by each SCP, respective controls lists for the plurality of SCPs, each controls list identifies controls which are active at the corresponding SCP; generating a new control by any one SCP of the plurality of SCPs in the load sharing group; at the any one SCP, updating the controls list corresponding to itself to add the new control and sending an add control signal which identifies the new control to all other SCPs of the plurality of SCPs in the load sharing group; and at each of the other SCPs, updating the controls list corresponding to the any one SCP, that each maintains, to add the identified new control.

In a second example, there is provided a load sharing group of service control points (SCPs), comprising: two SCPs; and a communications link interconnecting the two SCPs.

In particular, the two SCPs each maintains a first controls list which identifies active controls at that SCP and a second controls list which identifies the active controls at the other SCP.

More particularly, when either of the two SCPs adds a new control to its first controls list, that SCP sends a subsystem congestion message which identifies the new control, over the communications link, to the other SCP which in response updates its second controls list by adding the identified new control. Furthermore, when either of the two SCPs removes an existing control from its first controls list, that SCP sends a subsystem available message which identifies the existing control, over the communications link, to the other SCP which in response updates its second controls list by removing the identified existing control.

### Brief Description Of The Drawings

The invention will be better understood from the following description of an embodiment together with reference to the accompanying drawing, in which:
Figure 1 is a schematic illustrating a typical IN with an Operations, Administration and Maintenance management environment;
Figure 2 is a timing graph illustrating a definition of code gapping for network congestion control;
Figure 3 is a timing graph illustrating an example of code gapping in operation;
Figure 4 is a schematic illustrating a prior art load sharing SCP group operations environment;
Figure 5 is a timing graph illustrating an example of code gapping instability;
Figure 6 is a schematic illustrating an embodiment of a load sharing SCP group, in accordance with the present invention;
Figure 7 is a structural representation of an encoding format common to both Subsystem Congestion (SSC) and Subsystem Available (SSA) messages;
Figure 8 is a structural representation of an encoding format for the machine congestion time field in the SSC and SSA messages; and
Figure 9 is a timing graph illustrating message exchange between SCPs of a load sharing group and a SSP.

### Detailed Description

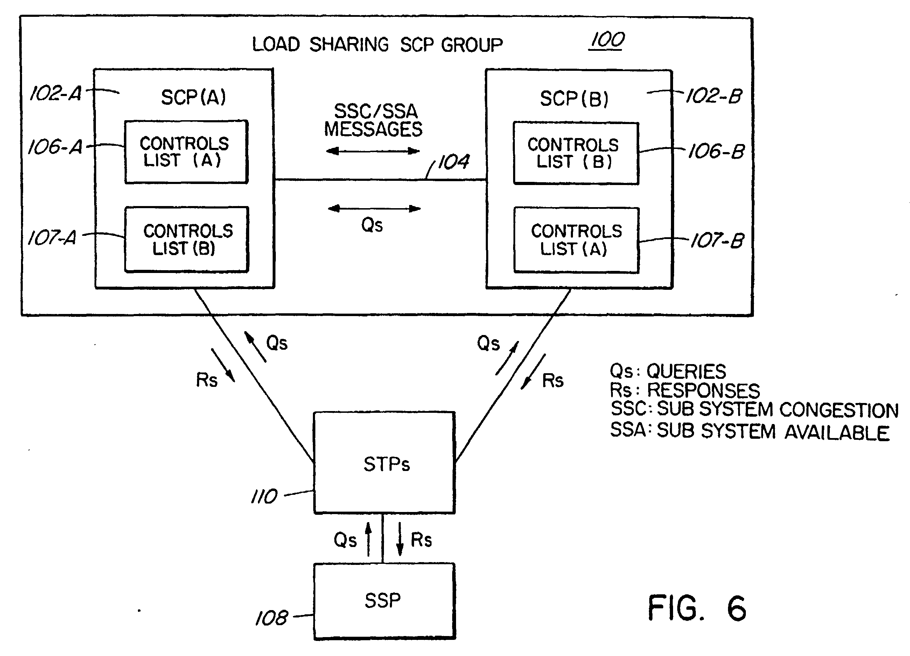

Referring to Figure 6, shown is an embodiment of a load sharing SCP group 100 having two (but may include more) SCPs 102, individually identified as SCP 102-A and SCP 102-B, which are coupled through a communications link 104. Each SCP 102 is responsible for maintaining and managing control status (or state) information in relation to the entire group 100. The control state information, for instance, may be in the form of individual controls lists for respective SCPs 102 constituting part of the load sharing group 100. In the particular embodiment shown in Figure 6, SCP 102-A and SCP 102-B each will manage two controls lists: a first controls list 106 in which its own generated controls are recorded and a second controls list(s) 107 in which the other SCP generated controls are recorded. At SCP 102-A, its own controls list is identified as SCP-A controls list 106-A, and the controls list for SCP 102-B that is maintained by SCP 102-A is identified as SCP-B controls list 107-A. At SCP 102-B, its own controls list is identified as SCP-B controls list 106-B, and the controls list for SCP 102-A that is maintained by SCP 102-B is identified as SCP-A controls list 107-B. The SCPs 102 exchange messages relating to control status and update each other's controls lists 107 when overload levels changed. The communications link 104 allows the SCPs 102 to exchange messages and information on their overload control status. A copy of the controls lists 108 of every SCP 102 in the load sharing group 100 may also reside on a Service Management System (SMS) (shown in Figure 1), so that the SMS may synchronize the controls on each SCP 102.

In operation, when one of the SCPs 102 in the load sharing group 100, for example SCP 102-A, receives a query message from the SSP 108 with an overload control indicator (e.g., an ACGEncountered parameter), it checks the two controls lists that it maintains, namely the SCP-A controls list 106-A which reflects its current control state and the SCP-B controls list 107-A which reflects the current control state of SCP 106-B, to verify if the control is active or needs to be updated.

When one SCP, e.g. SCP 102-A, requests overload control for a new GTA/TT, it adds the control to its SCP-A controls list 106-A and sends a message to the other SCP, SCP 102-B, with the new GTA/TT. When SCP 102-B receives the message from SCP 102-A, it updates the SCP-A controls list 107-B with the new GTA/TT. When SCP 102-A removes an existing control from its SCP-A controls list 106-A (when overload level changed), it sends a message to SCP 102-B with the new GTA/TT and then SCP 102-B updates the SCP-A controls lists 1-7-B which it is maintaining. The communications link 104 between the SCPs 102-A and 102-B ensures that both SCPs 102 are aware of their overload status, and enables the SCPs 102 to exchange their load and resource status.

To facilitate exchanging of controls list information, it is advantageous to provide the communication link 104 between the SCPs 102 in the group 100. This link allows each SCP 102 to readily communicate to the other load sharing SCP 102 any changes in its active controls list 106 (e.g., addition or deletion of a control), so that the other SCP 102 may update the controls list 107 being maintained for that SCP. The communications link 104 may be, for example, a direct data connection or a local area network (LAN) such as Ethernet. SCP status messages, including Subsystem Congestion (SSC) and Subsystem Available (SSA) messages are exchanged between the SCPs 102 over the link 104. It also provides a data link for routing the queries from an overloaded SCP to the other SCP.

If any SCP 102 in the load sharing group 100, say SCP 102-A in Figure 6, is reaching a predetermined congestion threshold level for a specific SSN (e.g., a Calling Name Delivery (CNAM) service with SSN =233), SCP 102-A sends a Subsystem Congestion (SSC) message to the other SCPs in the group 100, in this example SCP 102-B, to inform SCP 102-B with SCP 102-A's overload status. Upon sending the SSC message, SCP 102-A will automatically reroute queries which are distend to it, to SCP 102-B, as long as the SCP-B controls list 107-A maintained by SCP-A does not reflect that SCP 102-B has an active control corresponding to the queries. The SCP 102-A threshold setting for congestion would be set to account for the processing required for re-routing queries to the other SCP 102.

Moreover, if the overload at SCP 102-A continues to increase to another predetermined congestion level, then SCP 102-A will request the SSP to apply code gapping for the type of query causing the overload and it may stop re-routing that query to SCP 102-B.

When the overload level on SCP 102-A decreases for this specific SSN (e.g., SSN=233), SCP 102-A sends a Subsystem Available (SSA) message to SCP 102-B to inform it with SCP 102-A's new status and availability to process queries.

When both SCPs, 102-A and 102-B, are overloaded, the queries distend to the load sharing SCP group 100 will be discarded. When the SSP T1 timer expires, the SSP routes the calls to final treatment or default routing.

With regard to SCP controls lists synchronization, when SCP 102-A generates a new GTA/TT control, it adds that control to its active SCP-A controls list 106-A and sends a message to SCP 102-B with this control information. When SCP 102-B receives the message from SCP 102-A, SCP 102-B updates the SCP-A controls list 107-B with the new control. When SCP 102-B generates a new control, it executes the same action as described previously in respect of the SCP 102-A generated control.

When SCP 102-A removes an existing control from its SCP-A controls list 106-A, for instance in response to a change in overload level, it sends a message to SCP 102-B with the new information. When SCP 102-B receives the message from SCP 102-A, SCP 102-B removes the identified control from its SCP-A controls list 107-B. For SCP 102-B to initiate removal of a control, it executes the same actions as described previously in respect of the SCP 102-A initiated removal.

The SCPs 102-A and 102-B check both active controls lists 106 and 107 when each receive a query from a SSP 108. If an ACGEncountered parameter is attached to the query, the SCPs 102 checks its own 106 and the other SCP controls lists 107 to verify if the control is activated.

The follow provides a particular encoding format for the Subsystem Congestion (SSC) and SubSystem Available (SSA) messages. It also defines a particular data link protocol to carry the SSC, SSA and queries between the SCPs 102 in the load sharing group 100. The message exchange sequence is also given. However, it should be understood that these specific operational parameters may be readily modified for adaptation to the requirements of the particular implementation.

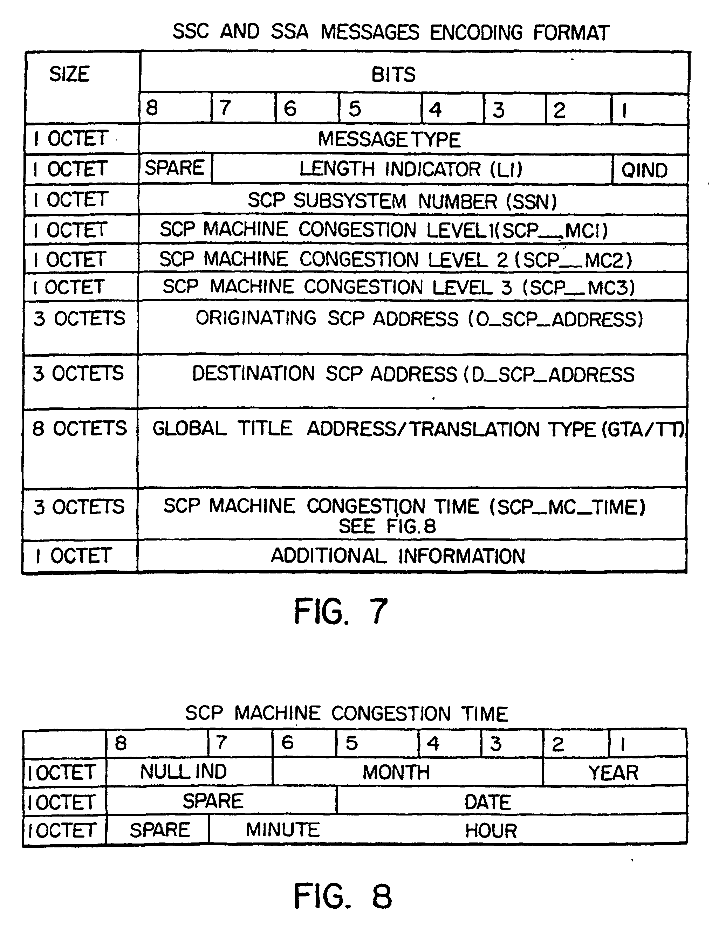

Figure 7 illustrates an exemplary encoding format common to both the SSC message and the SSA message. Each SSC and SSA message has a length of 24 Octets. The SSC and SSA messages include the following fields.
• Message Type field: Parameter identifies the message type to be either SSA or SSC.
• Queries Indicator (QInd) field: Parameter in this field determines whether or not the queries distend to the SCP will be routed to the other SCP. The QInd field may be encoded as follows:

| Bit 1 | Indication |
|---|---|
| 0 | No queries are routed from the overloaded SCP |
| 1 | Queries are routed from the overloaded SCP. |

• Length Indicator (LI) field: Parameter indicates the number of octets contained in the SSC or SSA message. Length is indicated as a binary number. A length indicator of value 0 (i.e., code "000000") designates a fill-in signal unit. If the information field of the message spans more than 62 octets, the length indicator is set to maximum value, namely 63 (code "111111").
• SCP Subsystem Number (SSN) field: Parameter in this field identifies the IN process within the SCP. Several SSNs may identify respective IN processing within the SCP, (e.g., SSN = 233 for Call Name Display service application). Each SSN is associated with a particular application processing on the SCP.
• Machine Congestion Level 1 (MC1) field: Parameter identifies the first level of congestion on the SCP. If the SCP overload level reaches MC1, that SCP initiates a control for the particular type of query and subsequently routes similar queries to the other SCPs in the group.
• Machine Congestion Level 2 (MC2) field: Parameter identifies the second level of congestion on the SCP. If the SCP overload level reaches MC2, it requests the SSP to apply gapping control and the routing of queries to the other SCP will be terminated.
• Machine Congestion Level 3 (MC3) field: This field identifies the third level of congestion on the SCP. Overload above this level represents a failure state for the SCP. Queries are discarded.
• Originating SCP Address (O_SCP_Address) field: Parameter in this field indicates from which SCP the SSC or SSA message came. The O_SCP_Address field identifies the address of the SCP and it is 3 Octets in length.
• Destination SCP Address (D_SCP_Address) field: Parameter in this field indicates to which SCP the SSC or SSA message is being sent. The D_SCP_Address field identifies the address of the SCP and it is 3 Octets in length.
• Global Title Address/Translation Type (GTA/TT) field: The GTA/TT parameter is converted at the Signaling Transfer Point (STP) to the SCP Point Code and SSN of the application running on the SCP. This field is 8 Octets and may be populated as defined for standard IN messages.
• SCP Congestion time (SCP_MC_Time) field: Depending on the context, the parameter in this field indicates either, in the SSC message, the time when the SCP is overloaded or, in the SSA message, the time when the overload level deceased. This field is 3 octets in length, for which an encoding is illustrated in Figure 8 and described below.
• Time Year field: In the first Octet of the SCP_MC_Time field, parameter may be encoded as follows:

| Bits 21 | Indication |
|---|---|
| 00 | Last year (value=0) |
| 01 | Current year (value=1) |
| 10 | Next year (value=2) |
| 11 | Spare |

• Time Month field: In the first Octet of the SCP_MC_Time field, parameter may be encoded as follows:

| Bits 6543 | Indication |
|---|---|
| 0000 | Spare |
| 0001 | January |
| 0010 | February |
| 0011 | March |
| 0100 | April |
| 0101 | May |
| 0110 | June |
| 0111 | July |
| 1000 | August |
| 1001 | September |
| 1010 | October |
| 1011 | November |
| 1100 | December |
| 1101 | Spare |
| 1110 | Spare |
| 1111 | Spare |

• Time Null Indicator field: In the first Octet of the SCP_MC_Time field, parameter may be encoded as follows:

| Bits 87 | Indication |
|---|---|
| 00 | Null |
| 01 | Not Null |
| 10 | Reserved |
| 11 | Reserved |

• Time Date field: In the second Octet of the SCP_MC_Time field, parameter may be encoded as follows:

| Bits 54321 | Indication |
|---|---|
| 00000 | Spare |
| 00001 | 1 |
| 00010 | 2 |
| 00011 | 3 |
| 00100 | 4 |
| 00101 | 5 |
| 00110 | 6 |
| 00111 | 7 |
| 01000 | 8 |
| 01001 | 9 |
| 01010 | 10 |
| 01011 | 11 |
| 01100 | 12 |
| 01101 | 13 |
| 01110 | 14 |
| 01111 | 15 |
| 10000 | 16 |
| 10001 | 17 |
| 10010 | 18 |
| 10011 | 19 |
| 10100 | 20 |
| 10101 | 21 |
| 10110 | 22 |
| 10111 | 23 |
| 11000 | 24 |
| 11001 | 25 |
| 11010 | 26 |
| 11011 | 27 |
| 11100 | 28 |
| 11101 | 29 |
| 11110 | 30 |
| 11111 | 31 |

• Time Hour field: In the third Octet of the SCP_MC_Time field, parameter may be encoded as follows:

| Bits 54321 | Indication |
|---|---|
| 00000 | 0 |
| 00001 | 1 |
| 00010 | 2 |
| 00011 | 3 |
| 00100 | 4 |
| 00101 | 5 |
| 00110 | 6 |
| 00111 | 7 |
| 01000 | 8 |
| 01001 | 9 |
| 01010 | 10 |
| 01011 | 11 |
| 01100 | 12 |
| 01101 | 13 |
| 01110 | 14 |
| 01111 | 15 |
| 10000 | 16 |
| 10001 | 17 |
| 10010 | 18 |
| 10011 | 19 |
| 10100 | 20 |
| 10101 | 21 |
| 10110 | 22 |
| 10111 | 23 |
| 11000 | Spare |
| 11001 | Spare |
| 11010 | Spare |
| 11011 | Spare |
| 11100 | Spare |
| 11101 | Spare |
| 11110 | Spare |
| 11111 | Spare |

• Time Minute field: Parameter in this field identifies the nearest quarter-hour. In the third Octet of the SCP_MC_Time field, the parameter may be encoded as follows:

| Bits 76 | Indication |
|---|---|
| 00 | 0 minutes |
| 01 | 15 minutes |
| 10 | 30 minutes |
| 11 | 45 minutes |

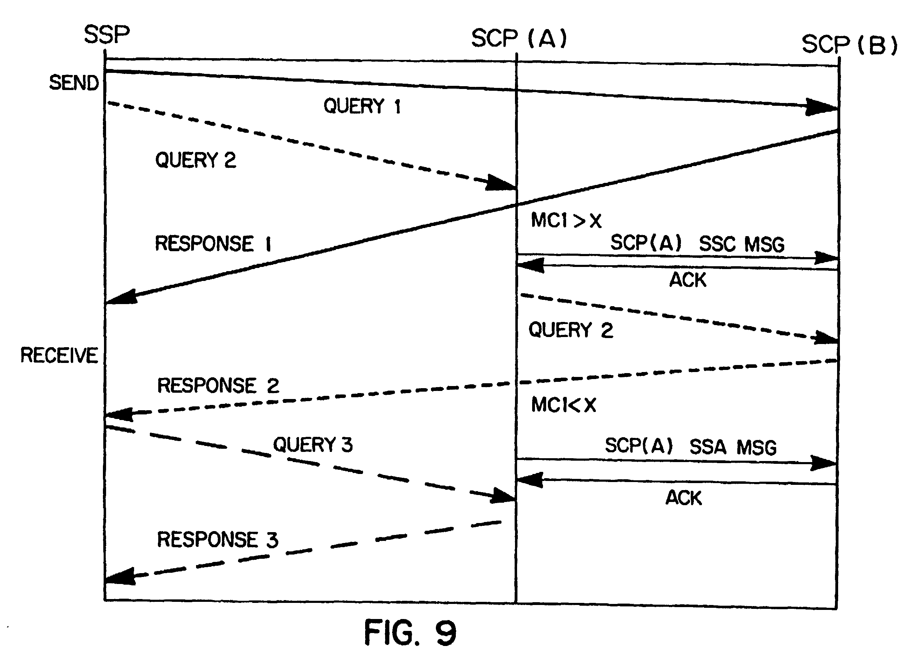

Turning now to Figure 9, exemplified is the message exchange between the SSP, and SCP-A and SCP-B of the load sharing SCP group. Queries are generated as per [1] GR-1298-CORE, and the GTA/TT in such queries identifies the SCP for the service as is conventional. In accordance with the preferred implementation of the present invention, changes in the queries and messages exchanged between the SSP and the load sharing SCP group are not necessary. An example of a typical exchange is Query 1 and Response 1.

Within the load sharing group, in accordance with the present invention, SCP-A and SCP-B exchange control state information, via the communications link therebetween, using the SSC and the SSA messages. For instance, when congestion at SCP-A exceeds its machine congestion level 1 (MC1), SCP-A sends an SSC message indicating such to SCP-B which then updates the SCP-A controls list it maintains and replies to SCP-A with an acknowledgement message. Subsequently, Query 2 directed to SCP load sharing group may be forwarded via SCP-A to SCP-B which generates an appropriate response thereto. Once congestion at SCP-A decreases below its level 1 threshold, SCP-A sends an SSA message indicating this change in its control state to SCP-B which updates accordingly the SCP-A controls list it maintains and replies with an acknowledgement message. The communications link between SCP-A and SCP-B does not impact the existing flow of messages in the Intelligent Network, and message exchanges between the SCPs will have no impact on the current network operations.

The preferred embodiment of the SCP load sharing group consists of two SCPs in order to minimize utization of the capacity of each SCP forming the group. For multiple load sharing SCPs, communication links therebetween will produce a new overlaid network of SCPs. The number of controls lists on each SCP is proportional to the number of SCPs in the group. As the number of SCPs in load sharing SCP group increases, the number of controls lists on each SCP in the group increases accordingly. The SCPs messages exchanges and processing will impact the SCPs real time processing capacity. Synchronization of the controls lists on the SCPs and SMS may also be complex and real time consuming.

Those skilled in the art will recognize that various modifications and changes could be made to the invention. It should therefore be understood that the claims are not to be considered as being limited to the precise embodiments set forth above, in the absence of specific limitations directed to each embodiment.

## Claims

1. A method for synchronizing operation of a plurality of service control points (SCPs) (102-A, 102-B) in a load sharing group (100), **characterised in that** the method comprises the steps of:
maintaining, by each SCP, respective overload controls lists (106-A, 106-B, 107-A, 107-B) for the plurality of SOPs, each overload controls list identifies overload controls which are active at the corresponding SCP;
generating a new overload control by any one SCP (102-A) of the plurality of SCPs in the load sharing group;
at the any one SCP, updating the overload controls list corresponding to itself (106-A) to add the new overload control and sending an add overload control signal which identifies the new overload control to all other SCPs (102-B) of the plurality of SCPs in the load sharing group; and
at each of the other SCPs (102-B), updating the overload controls list corresponding to the any one SCP (107-B), that each maintains, to add the identified new overload control.

2. A method as claimed in claim 1, wherein the step of generating the new overload control includes receiving, by the any one SCP (102-A), a query which results in the any one SCP being overloaded; and further comprising routing, based on the respective overload controls lists (107-A) for the other SCPs that are maintained by the any one SCP, the query to an available SCP of the other SCPs which does not have an active overload control corresponding to the query.

3. A method as claimed in claim 2, comprising the steps of:
at the any one SCP (102-A) of the plurality of SCPs in the load sharing group, updating the maintained overload controls list corresponding to itself (106-A) to remove an existing overload control therein and sending a remove overload control signal which identifies the existing overload control to the other SCPs (102-B) of the plurality of SCPs in the load sharing group; and
at each of the other SCPs (102-B), updating the overload controls list corresponding to the any one SCP (107-B), that each maintains, to remove the identified existing overload control.

4. A method as claimed in any preceding claim, wherein the plurality of SCPs are interconnected by a communications link (104), by which the overload control signal is sent from the any one SCP to the other SCPs in the load sharing group.

5. A method as claimed in claim 4, wherein a query (Qs) received at the any one SCP is routed from the any one SCP over the communications link (104) to an available SCP.

6. A method as claimed in any preceding claim, wherein individual overload controls in the overload controls lists (106-A, 106-B, 107-A, 107-B) are identified by a global title address and translation type, and each query includes respective indications for the global title address and the translation type.

7. A method as claimed in claim 6, wherein the any one SCP is overloaded when the predetermined congestion level which is associated with the global title address and the translation type indicated in the received query is reached; and the add overload control signal includes an address of the any one SCP, the global title address and the translation type.

8. A method as claimed in any preceding claim, wherein the add overload control signal indicates one or more levels of congestion on the any one SCP.

9. A method as claimed in any preceding claim, comprising disregarding queries which have a corresponding active overload control in all of the respective overload controls lists for the plurality of SCPs (102-A, 102-B) in the load sharing group (100).

10. A load sharing group (100) of service control points (SCPs) (102-A, 102-B), comprising:
two SCPs (102-A, 102-B); and
a communications link (104) interconnecting the two SCPs; **characterised in that** the two SCPs each maintain a first overload controls list (106-A, 106-B) which identifies active overload controls at that SCP and a second overload controls list (107-A, 107-B) which identifies the active overload controls at the other SCP.

11. A load sharing group (100) as claimed in claim 10, wherein when either of the two SCPs (102-A, 102-B) adds a new overload control to its first overload controls list (106-A, 106-B), that SCP sends a subsystem congestion message (SSC) which identifies the new overload control, over the communications link (104), to the other SCP which in response updates its second overload controls list (107-A, 107-B) by adding the identified new overload control; and wherein when either of the two SCPs (102-A, 102-B) removes an existing overload control from its first overload controls list (106-A, 106-B), that SCP sends a subsystem available message (SSA) which identifies the existing overload control, over the communications link (104), to the other SCP which in response updates its second overload controls list (107-A, 107-B) by removing the identified existing overload control.

12. A load sharing group (100) as claimed in claim 11, wherein new overload control in the subsystem congestion message (SSC) or the existing overload control in the subsystem available message (SSA) are identified by a global title address and translation type.

13. A load sharing group (100) as claimed in claim 12, wherein the subsystem congestion message (SSC) and the subsystem available message (SSA) each includes an originating SCP address, a destination SCP address, and one or more levels of congestion.

14. A method for operating a service control point (102-A) (SCP) in a load sharing group (100) of a plurality of SCPs (102-A, 102-B), **characterised in that** the method comprises the steps of:
maintaining, by the SCP, respective overload controls lists (106-A, 107-A) for the plurality of SCPs, each overload controls list identifying overload controls which are active at the corresponding SCP;
generating a new overload control by the SCP (102-A);
at the SCP, updating the overload controls list (106-A) corresponding to itself to add the new overload control and sending an add overload control signal which identifies the new overload control to all other SCPs (102-B) of the plurality of SCPs in the load sharing group (100).

## Patentansprüche

1. Verfahren zur Synchronisation des Betriebs einer Mehrzahl von Dienstesteuerungsstellen (SCP's) (102-A, 102-B) in einer Lastverteilungsgruppe (100), **dadurch gekennzeichnet, daß** das Verfahren die folgenden Schritte umfaßt:
Führen jeweiliger Überlast-Steuerungslisten (106-A, 106-B, 107-A, 107-B) für die Mehrzahl von SCP's an jeder SCP, wobei jede Überlast-Steuerungsliste Überlast-Steuerungen identifiziert, die an der entsprechenden SCP aktiv sind;
Erzeugen einer neuen Überlast-Steuerung durch eine SCP (102-A) der Mehrzahl von SCP's in der Lastteilungsgruppe;
an der einen SCP's, Aktualisieren der Überlast-Steuerungsliste, die der SCP selbst (106-A) entspricht, um die neue Überlast-Steuerung hinzuzufügen und um ein Überlast-Hinzufügungs-Steuerungssignal, das die neue Überlast-Steuerung identifiziert, an alle anderen SCP's (102-B) der Vielzahl von SCP's in der Lastverteilungsgruppe zu senden; und
an jeder der anderen SCP's (102-B), Aktualisieren der Überlast-Steuerungsliste, die irgendeiner der SCP (107-B) entspricht, die jede führt, um die identifizierte neue Überlast-Steuerung hinzuzufügen.

2. Verfahren nach Anspruch 1, bei dem der Schritt der Erzeugung der neuen Überlast-Steuerung den Empfang einer Anfrage, die dazu führt, daß die eine SCP überlastet wird, durch die eine SCP (102-A) einschließt, und weiterhin das Lenken der Anfrage auf der Grundlage der jeweiligen Überlast-Steuerungsiisten (107-A) für die anderen SCP's die von der einen SCP geführt werden, an eine verfügbare SCP der anderen SCP's umfaßt, die keine aktive Überlast-Steuerung hat, die der Anfrage entspricht.

3. Verfahren nach Anspruch 2, das die folgenden Schritte umfaßt:
an der einen SCP (102-A) der Vielzahl von SCP's in der Lastverteilungsgruppe, Aktualisieren der geführten Überlast-Steuerungsliste, die ihr selbst (106-A) entspricht, um eine darin vorhandene Überlast-Steuerung zu entfernen und um ein Überlast-Steuerungs-Entfernungssignal zu senden, das die vorhandene Überlast-Steuerung für die anderen SCP's (102-B) der Vielzahl von SCP's in der Lastverteilungsgruppe identifiziert; und
an jeder der anderen des SCP's (102-B), Aktualisieren der Überlast-Steuerungsliste, die der einen SCP (107-B) entspricht, die jede SCP führt, um die identifizierte vorhandene Überlast-Steuerung zu entfernen.

4. Verfahren nach einem der vorhergehenden Ansprüche, bei dem die Mehrzahl der SCP's durch eine Kommunikations-Verbindungsstrecke (104) miteinander verbunden sind, über die das Überlast-Steuerungssignal von der einen SCP zu den anderen SCP's in der Lastverteilungsgruppe gesandt wird.

5. Verfahren nach Anspruch 4, bei dem eine an der einen SCP empfangene Anfrage (Qs) von der einen SCP über die Kommunikations-Verbindungsstrecke (104) zu einer verfügbaren SCP gelenkt wird.

6. Verfahren nach einem der vorhergehenden Ansprüche, bei dem einzelne Überlast-Steuerungen in den Überlast-Steuerungslisten (106-A, 106-B, 107-A, 107-B) durch eine globale Titeladresse und einen Übersetzungstyp identifiziert sind, und bei dem jede Anfrage jeweilige Anzeigen für die globale Titeladresse und dem Übersetzungstyp einschließt.

7. Verfahren nach Anspruch 6, bei dem die eine SCP überlastet ist, wenn der vorgegebene Überlastgrad, der der globalen Titeladresse und dem Übersetzungstyp, die in der empfangenen Anfrage angezeigt sind, erreicht ist, und bei dem das zusätzliche Überiast-Steuerungssignal eine Adresse der einen SCP, die globale Titeladresse und den Übersetzungstyp einschließt.

8. Verfahren nach einem der vorhergehenden Ansprüche, bei dem das zusätzliche Überlast-Steuerungssignal einen oder mehrere Grade der Überlast an der einen SCP anzeigt.

9. Verfahren nach einem der vorhergehenden Ansprüche, das das Nichtberücksichtigen von Anfragen umfaßt, die entsprechende aktive Überlast-Steuerungen in allen den jeweiligen Überiast-Steuerungslisten für die Mehrzahl von SCP's (102-A, 102-B) in der Lastverteilungsgruppe (100) haben.

10. Lastverteilungsgruppe (100) von Dienstesteuerungspunkten (SCP's) (102-A, 102-B) mit:
zwei SCP's (102-A, 102B); und
eine Kommunikations-Verbindungsstrecke (104), die die zwei SCP's miteinander verbindet, **dadurch gekennzeichnet, daß** die beiden SCP's jeweils eine erste Überlast-Steuerungsliste (106-A, 106-B), die die aktiven Überlast-Steuerungen an dieser SCP identifiziert, und eine zweite Überlast-Steuerungsliste (107-A, 107-B) führen, die die aktiven Überlast-Steuerungen an der anderen SCP identifizieren.

11. Lastverteilungsgruppe (100) nach Anspruch 10, bei dem, wenn eine der zwei SCP's (102-A, 102-B) eine neue Überlast-Steuerung zu ihrer ersten Überlast-Steuerungsliste (106-A, 106-B) hinzufügt, diese SCP eine Teilsystem-Überlastmeldung (SSC), die die neue Überlast-Steuerung identifiziert, über die Kommunikations-Verbindungsstrecke (104) an die andere SCP sendet, die als Antwort hierauf ihre zweite Überlast-Steuerungsiiste (107-A, 107-B) dadurch aktualisiert, daß die identifizierte neue Überlast-Steuerung hinzugefügt wird; und bei dem, wenn eine der beiden SCP's (102-A, 102-B) eine vorhandene Überlast-Steuerung von ihrer ersten Überlast-Steuerungsliste (106-A, 106-B) entfernt, diese SCP eine Teilsystem-Verfügbar-Meldung, die die vorhandene Überlast-Steuerung identifiziert, über die Kommunikations-Verbindungsstrecke (104) an die andere SCP sendet, die als Antwort hierauf ihre zweite Überlast-Steuerungsliste (107-A, 107-B) dadurch aktualisiert, daß die identifizierte vorhandene Überlast-Steuerung entfernt wird.

12. Lastverteilungsgruppe (100) nach Anspruch 11, bei der neue Überlast-Steuerungen in der Teilsystem-Überlast-Meldung (SSC) oder die vorhandene Überlast-Steuerung in der Teilsystem-Verfügbar-Meldung (SSA) durch eine globale Titeladresse und einen Übersetzungstyp identifiziert werden.

13. Lastverteilungsgruppe (100) nach Anspruch 12, bei der die Teilsystem-Überlast-Meldung (SSC) und die Teilsystem-Verfügbar-Meldung (SSA) jeweils eine Ursprungs-SCP-Adresse, eine Ziel-SCP-Adresse und ein oder mehrere Überlastpegel einschließen.

14. Verfahren zum Betrieb eines Dienste-Steuerungspunktes (102-A) (SCP) in einer Lastverteilungsgruppe (100) einer Mehrzahl von SCP's (102-A, 102-B) **dadurch gekennzeichnet, daß** das Verfahren die folgenden Schritte umfaßt:
Führen, durch die SCP, jeweiliger Überlast-Steuerungslisten (106-A, 107-A) für die Vielzahl von SCP's, wobei jede Überlast-Steuerungsliste Überlast-Steuerungen identifiziert, die an der entsprechenden SCP aktiv sind;
Erzeugen einer neuen Überlast-Steuerung durch die SCP (102-A);
an der SCP, Aktualisieren der Überlast-Steuerungsliste (106-A), die ihr selbst entspricht, um die neue Überlast-Steuerung hinzuzufügen, und um ein hinzugefügtes Überlast-Steuerungssignal, das die neue Überlast-Steuerung identifiziert, an allen anderen SCP's (102-B) der Mehrzahl von SCP's in der Lastverteilungsgruppe (100) zu senden.

## Revendications

1. Procédé pour synchroniser le fonctionnement d'une pluralité de points de commande de service (SCP) (102-A, 102-B) dans un groupe de partage de charge (100), **caractérisé en ce que** le procédé comprend les étapes :
maintenir, par chaque SCP, des listes de commandes de surcharge respectives (106-A, 106-B, 107-A, 107-B) pour la pluralité de SCP, chaque liste de commandes de surcharge identifiant les commandes de surcharge qui sont actives au SCP correspondant ;
générer une nouvelle commande de surcharge par un SCP quelconque (102-A) de la pluralité de SCP dans le groupe de partage de charge ;
audit SCP quelconque, mettre à jour la liste de commandes de surcharge correspondant à lui-même (106-A) pour ajouter la nouvelle commande de surcharge et envoyer un signal d'ajout de commande de surcharge qui identifie la nouvelle commande de surcharge, à tous les autres SCP (102-B) de la pluralité de SCP dans le groupe de partage de charge ; et
à chacun des autres SCP (102-B), mettre à jour la liste des commandes de surcharge correspondant audit SCP quelconque (107-B), que chacun maintient, pour ajouter la nouvelle commande de surcharge identifiée.

2. Procédé selon la revendication 1, dans lequel l'étape de génération de la nouvelle commande de surcharge comprend une réception par ledit SCP quelconque (102-A) d'une demande qui entraîne la surcharge dudit SCP quelconque ; et comprenant de plus un acheminement, basé sur les listes de commandes de surcharge respectives (107-A) pour les autres SCP, qui sont maintenues par ledit SCP quelconque, de la demande à un SCP disponible parmi les autres SCP qui ne possède pas de commande de surcharge active correspondant à la demande.

3. Procédé selon la revendication 2, comprenant les étapes :
audit SCP quelconque (102-A) de la pluralité de SCP dans le groupe de partage de charge, mettre à jour la liste de commandes de surcharge maintenue lui correspondant (106-A) pour supprimer une commande de surcharge existante dans celle-ci et envoyer un signal de suppression de commande de surcharge qui identifie la commande de surcharge existante aux autres SCP (102-B) de la pluralité de SCP dans le groupe de partage de charge ; et
à chacun des autres SCP (102-B), mettre à jour la liste de commandes de surcharge correspondant audit SCP quelconque (107-B), que chacun maintient, pour supprimer la commande de surcharge existante identifiée.

4. Procédé selon l'une quelconque des revendications précédentes, dans lequel les SCP de la pluralité de SCP sont interconnectés par un lien de communication (104) par lequel le signal de commande de surcharge est envoyé depuis ledit SCP quelconque vers les autres SCP dans le groupe de partage de charge.

5. Procédé selon la revendication 4, dans lequel une demande (Qs) reçue audit SCP quelconque est acheminée depuis ledit SCP quelconque par le lien de communication (104) à un SCP disponible.

6. Procédé selon l'une quelconque des revendications précédentes, dans lequel des commandes de surcharge individuelles dans les listes de commandes de surcharge (106-A, 106-B, 107-A, 107-B) sont identifiées par une adresse de titre globale (GTA) et un type de traduction (TT) et chaque demande comprend des indications respectives pour l'adresse de titre globale et le type de traduction.

7. Procédé selon la revendication 6, dans lequel ledit SCP quelconque est surchargé lorsque le niveau de congestion prédéterminé qui est associé à l'adresse de titre globale et le type de traduction désignés dans la demande reçue est atteint ; et le signal d'ajout de commande de surcharge comprend une adresse dudit SCP quelconque, l'adresse de titre globale et le type de traduction.

8. Procédé selon l'une quelconque des revendications précédentes, dans lequel le signal d'ajout de commande de surcharge indique un ou plusieurs niveaux de congestion sur ledit SCP quelconque.

9. Procédé selon l'une quelconque des revendications précédentes, comprenant un rejet des demandes qui ont une commande de surcharge active correspondante dans toutes les listes de commandes de surcharge respectives pour la pluralité de SCP (102-A, 102-B) dans le groupe de partage de charge (100).

10. Groupe de partage de charge (100) de points de commande de service (SCP)(102-A, 102-B), comprenant :
deux SCP (102-A, 102-B) ; et
un lien de communication (104) interconnectant les deux SCP, **caractérisé en ce que** les deux SCP maintiennent chacun une première liste de commande de surcharge (106-A, 106-B) qui identifie les commandes de surcharge actives à ce SCP et une seconde liste de commandes de surcharge (107-A, 107-B) qui identifie les commandes de surcharge actives à l'autre SCP.

11. Groupe de partage de charge (100) selon 1a revendication 10, dans lequel lorsque l'un quelconque des deux SCP (102-A, 102-B) ajoute une nouvelle commande de surcharge à sa première liste de commandes de surcharge (106-A, 106-B), le SCP envoie un message de congestion de sous-système (SSC) qui identifie la nouvelle commande de surcharge par le lien de communication (104) à l'autre SCP qui en réponse met à jour sa seconde liste de commandes de surcharge (107-A, 107-B) en ajoutant la nouvelle commande de surcharge identifiée ; et dans lequel lorsque l'un quelconque des deux SCP (102-A, 102-B) supprime une commande de surcharge existante de sa première liste de commandes de surcharge (106-A, 106-B), le SCP envoie un message de sous-système disponible (SSA) qui identifie la commande de surcharge existante, par le lien de communication (104) à l'autre SCP qui, en réponse, met à jour sa seconde liste de commandes de surcharge (107-A, 107-B) en supprimant la commande de surcharge existante identifiée.

12. Groupe de partage de charge (100) selon la revendication 11, dans lequel une nouvelle commande de surcharge dans le message de congestion de sous-système (SSC) ou la commande de surcharge existante dans le message de sous-système disponible (SSA) sont identifiées par une adresse de titre globale et un type de traduction.

13. Groupe de partage de charge (100) selon la revendication 12, dans lequel le message de congestion de sous-système (SSC) et le message de sous-système disponible (SSA) comprennent chacun une adresse SCP d'origine, une adresse SCP de destination et un ou plusieurs niveaux de congestion.

14. Procédé pour l'exploitation d'un point de commande de service (102-A)(SCP) dans un groupe de partage de charge (100) d'une pluralité de SCP (102-A, 102-B), **caractérisé en ce que** le procédé comprend les étapes :
maintenir, par le SCP, des listes de commandes de surcharge respectives (106-A, 107-A) pour la pluralité de SCP, chaque liste de commande de surcharge identifiant des commandes de surcharge qui sont actives au SCP correspondant ;
générer une nouvelle commande de surcharge par le SCP (102-A) ;
au SCP, mettre à jour la liste de commandes de surcharge (102-A) lui correspondant pour ajouter la nouvelle commande de surcharge et envoyer un signal d'ajout de commande de surcharge qui identifie la nouvelle commande de surcharge à tous les autres SCP (102-B) de la pluralité de SCP dans le groupe de partage de charge (100).
